# EUROPEAN PATENT APPLICATION

(11) **EP 4 631 764 A1**
(43) Date of publication of application: **15.10.2025**
(21) Application number: 25164907.5
(22) Date of filing: 20.03.2025
(51) Int. Cl.: B60K 35/28, B60K 35/81, B60L 15/20, B60L 50/50, B60L 53/67, B60L 53/68

(54) **CO2 EQUIVALENTS DISPLAY METHOD AND SYSTEM FOR A VEHICLE**

(30) Priority: 12.04.2024 CN 202410439603
(71) Applicant: Bayerische Motoren Werke Aktiengesellschaft, 80809 München (DE)
(72) Inventor: Marcus, Philipp, 85560 Ebersberg (DE)

(57) **Abstract**

The invention provides a method and system for displaying CO₂ equivalents for a vehicle, the method comprising: when the vehicle is in motion, obtaining a carbon intensity, gCO₂eq/kWh, per 1 kWh consumed, which is corresponding to that of a respective 1 kWh charge while charging, the carbon intensity being indicative of CO₂ equivalents per kWh; determining a current power consumption per kilometer, kWh/km, of the vehicle; determining a current CO₂ equivalents per kilometer, gCO₂eq/km, of the vehicle based on the carbon intensity, gCO₂eq/kWh, and the power consumption per kilometer, kWh/km; and displaying the current CO₂ equivalents per kilometer, gCO₂eq/km, to a driver. Additionally, the invention also provides a vehicle supporting CO₂ equivalents display function.

## Description

### FIELD OF THE INVENTION

The invention relates to a field of Internet of Vehicles, and more specifically, to a CO2 equivalents display method and system for a vehicle.

### BACKGROUND OF THE INVENTION

In order to achieve climate goals, all areas of life, including personal mobility, require environmentally conscious behavior. An important factor in this regard is that energy must not only come from sustainable sources but also be used efficiently.

For an electric vehicle, a total CO₂ equivalents generated per kilometer depends on the energy mix while charging (CO₂ equivalents per kilowatt-hour) and the output power at that time (watts), where the CO₂ equivalents per kilowatt-hour indicates how many grams of CO₂ are released into the atmosphere for each kWh of electricity consumed, which also represents the carbon emissions during the use of the electric vehicle.

Some commercially available electric vehicles are already equipped with the function of displaying or calculating the current battery power (e.g., displaying power consumption per kilometer or per 100 kilometers). However, there is currently no known solution that links the carbon equivalents (CO₂eq) while charging with a current power and displays it to a driver on a dashboard. This means that drivers cannot view the amount of greenhouse gases produced by their current driving mode while driving. As a result, drivers are less likely to consciously adopt a more eco-friendly driving mode when carbon emissions are high or to seek time periods with lower carbon equivalents or charging stations when charging.

Therefore, to further conserve energy and reduce emissions, and to make a positive contribution to carbon emission reduction in the field of electric vehicles, it is desirable to provide a CO₂ equivalents display solution for a vehicle.

### SUMMARY OF THE INVENTION

The present summary is provided to introduce some concepts that will be further described in the following specific embodiments in a simplified form. The present summary is not intended to identify key features or essential features of the claimed subject matter, nor is it intended to help determine the scope of the claimed subject matter.

According to a first aspect of the present invention, a CO2 equivalents display method for a vehicle is provided, the method comprising: when the vehicle is in motion, obtaining a carbon intensity, gCO₂eq/kWh, per 1 kWh consumed, which is corresponding to that of a respective 1 kWh charge while charging, the carbon intensity being indicative of CO₂ equivalents per kWh; determining a current power consumption per kilometer, kWh/km, of the vehicle; determining a current CO₂ equivalents per kilometer, gCO₂eq/km, of the vehicle based on the carbon intensity, gCO₂eq/kWh, and the power consumption per kilometer, kWh/km; and displaying the current CO₂ equivalents per kilometer, gCO₂eq/km, to a driver.

Therefore, in the technical solution of the embodiment of the present invention, by considering the energy mix while charging (CO₂ equivalents per kilowatt-hour, "CO₂eq") and the power consumption during driving (kWh/km), the current CO₂ equivalents per kilometer or per hundred kilometers (greenhouse gas emissions) are displayed to the driver at the vehicle end, thereby motivating the driver to adopt a more environmentally friendly driving mode or seek lower CO₂ equivalents time periods or charging stations when charging by visualization technology, further facilitating carbon emission reduction at the vehicle end.

According to an embodiment of the present invention, the carbon intensity is obtained in a first-in-first-out manner from a time series of carbon intensities corresponding to the charge per kWh while charging.

According to a further embodiment of the present invention, the time series of carbon intensities is stored in a memory of the vehicle or IT backend.

According to a further embodiment of the present invention, the current CO₂ equivalents per kilometer, gCO₂eq/km is calculated by multiplying the carbon intensity, gCO₂eq/kWh, with the power consumption per kilometer, kWh/km.

According to a further embodiment of the present invention, a carbon intensity corresponding to the charge per kWh while charging depends on a composition of energy mix while charging and is obtained from an API of the corresponding electricity supplier while charging.

According to a further embodiment of the present invention, displaying the current CO₂ equivalents per kilometer, gCO₂eq/km, to a driver further comprising: displaying the current CO₂ equivalents per kilometer, gCO₂eq/km, on a dashboard, a head-up display or any other display in the vehicle to the driver.

According to a further embodiment of the present invention, the method further comprising: recommending appropriate carbon emission reduction measures to the driver when the current CO₂ equivalents per kilometer, gCO₂eq/km, of the vehicle is above a threshold, the carbon emission reduction measures including activating an economic mode, changing to a more environmentally friendly driving mode or any other suitable carbon emission reduction measures.

According to a further embodiment of the present invention, the method further comprising: recommending time periods with low carbon intensities and the corresponding charging stations for users to choose at the next charging.

According to a second aspect of the present invention, a CO2 equivalents display system for a vehicle is provided, the system comprising: a data obtainment module configured to: when the vehicle is in motion, obtain a carbon intensity, gCO₂eq/kWh, per 1 kWh consumed, which is corresponding to that of a respective 1 kWh charge while charging, the carbon intensity being indicative of CO₂ equivalents per kWh; determine a current power consumption per kilometer, kWh/km, of the vehicle; a CO₂ equivalents determination module configured to determine a current CO₂ equivalents per kilometer, gCO₂eq/km, of the vehicle based on the carbon intensity, gCO₂eq/kWh, and the power consumption per kilometer, kWh/km; and a CO₂ equivalents display module configured to display the current CO₂ equivalents per kilometer, gCO₂eq/km, to a driver.

According to an embodiment of the present invention, the carbon intensity is obtained in a first-in-first-out manner from a time series of carbon intensities corresponding to the charge per kWh while charging.

According to a further embodiment of the present invention, the time series of carbon intensities is stored in a memory of the vehicle or IT backend.

According to a further embodiment of the present invention, a carbon intensity corresponding to the charge per kWh while charging depends on a composition of energy mix while charging and is obtained from an API of the corresponding electricity supplier while charging.

According to a further embodiment of the present invention, the CO₂ equivalents display module is configured as a dashboard, a head-up display or any other display in the vehicle.

According to a third aspect of the present invention, a vehicle comprising the CO2 equivalents display system of any one of the above aspects above is provided.

According to a fourth aspect of the present invention, a computer-readable storage medium storing instructions that, when executed, cause a vehicle to perform the method of any one of aspects above, is provided.

These and other features and advantages will become apparent by reading the following detailed description and referring to the associated accompanying drawings. It should be understood that the foregoing summary of the invention and the following detailed description are merely illustrative and are not intended to limit the claimed aspects.

### BRIEF DESCRIPTION OF THE DRAWINGS

To well understand the above features of the present invention in details, reference can be made to various embodiments, so as to describe the summary of the invention above more specifically, some aspects of which are depicted in the accompanying drawings. However, it should be noted that the accompanying drawings only show some typical aspects of the present invention, and thus should not be considered as limiting the scope of the present invention, because this description may allow other equivalent aspects.
FIG. 1 shows a schematic architectural diagram of a CO2 equivalents display system for a vehicle according to an embodiment of the present invention.
FIG. 2 shows a schematic diagram of obtaining a carbon intensity while charging according to an embodiment of the present invention.
FIG. 3 shows a schematic bar graph of a carbon intensity variation over time obtained from an API according to an embodiment of the present invention.
FIG. 4 shows an exemplary scenario of displaying CO2 equivalents at the vehicle end according to an embodiment of the present invention.
FIG. 5 shows a schematic flowchart of a CO2 equivalents display method for a vehicle according to an embodiment of the present invention.
FIG. 6 shows an exemplary vehicle supporting CO2 equivalents display according to an embodiment of the present invention.
FIG. 7 shows an exemplary computing device architectural diagram of an exemplary computing device that can implement various techniques described herein according to one embodiment of the present invention.

### DETAILED DESCRIPTION

The present invention will be described in detail below in conjunction with the accompanying drawings, and the characteristics of the present invention will be further shown in the following detailed description. The term "vehicle" as used throughout this description refers to any type of automobile including, but not limited to, cars, vans, trucks, buses, etc. For simplicity, the present invention is described in terms of "vehicle". The term "A or B" as used in the description means "A and B" and "A or B" and does not imply that A and B are exclusive, unless otherwise specified.

Currently, to achieve "green and low-carbon" for electric vehicles, some approaches (for example, using an economic mode, etc.) already exist to achieve energy conservations and emission reduction at the vehicle end. However, considering carbon emissions while charging, there is currently no visualized solution to provide feedback to a user at the vehicle end regarding the carbon equivalents generated per kilowatt-hour during driving, which in fact also depends on a composition of energy mix while charging.

To address the problems mentioned above and achieve visualized carbon equivalents feedback at the vehicle end, the present application proposes a CO₂ equivalents display solution for vehicles. By displaying a current CO₂ equivalents per kilometer or per hundred kilometers to a driver at the vehicle end, this solution encourages the driver to adopt a more environmentally friendly driving mode, charge when a proportion of sustainably generated energy in the energy mix is higher, etc., thereby facilitating carbon reduction at the vehicle end.

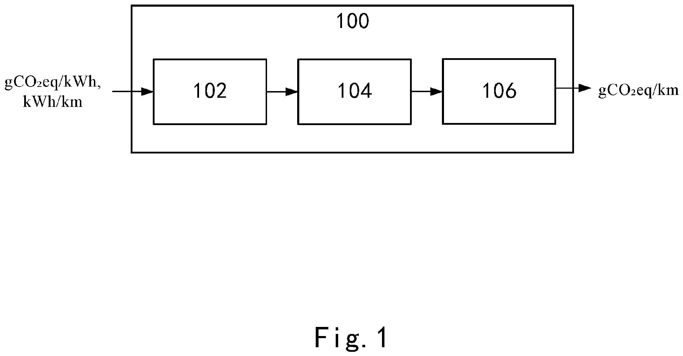

As shown in FIG. 1, FIG. 1 shows a schematic architectural diagram of a CO2 equivalents display system 100 for a vehicle according to an embodiment of the present invention. The system 100 may at least comprise a data obtainment module 102, a CO₂ equivalents determination module 104 and a CO₂ equivalents display module 106.

The data obtainment module 102 may obtain a carbon intensity, gCO₂eq/kWh, per 1 kWh consumed, which is corresponding to that of a respective 1 kWh charge while charging when the vehicle is in motion, wherein the carbon intensity being indicative of CO₂ equivalents per kWh (how many grams of CO₂ are released into the atmosphere for each kWh of electricity consumed).

In one embodiment, the above carbon intensity may be obtained in a first-in-first-out manner from a time series of carbon intensities corresponding to the charge per kWh while charging.

In a further embodiment, the time series of carbon intensities is stored in a memory of the vehicle or IT backend.

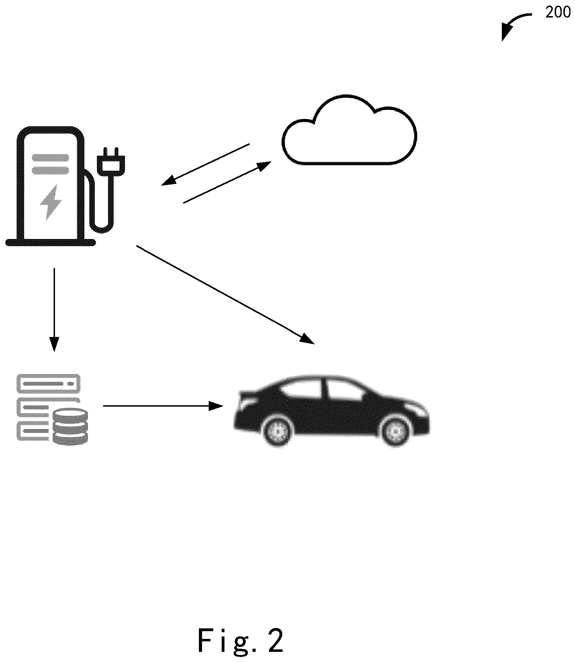

In one embodiment, a carbon intensity corresponding to the charge per kWh while charging may depend on a composition of energy mix while charging and may be obtained from an API (for example, from the cloud) of the corresponding electricity supplier while charging. The schematic architectural diagram related to obtaining carbon intensity is further described below in FIG. 2.

As shown in Figure 2, when a vehicle is charging, the corresponding charging station 202 may request a time series of carbon intensities (which essentially depends on a composition of the energy mix while charging) corresponding to the charge per kWh while charging from an API of the corresponding electricity supplier or from certain portal websites displaying a daily composition of the current energy mix, and obtains the corresponding time series of carbon intensities from these sources.

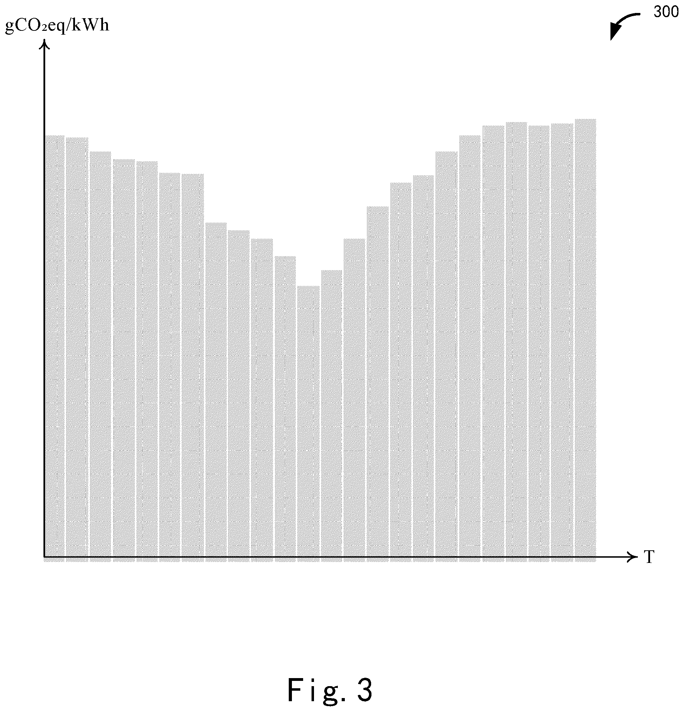

This is further described in detail in FIG. 3, which shows a schematic bar graph of a carbon intensity variation over time T obtained from an API according to an embodiment of the present invention. For example, when a vehicle is charging, in response to a request for time series of carbon intensities (gCO₂eq/kWh) corresponding to the charge per kWh while charging, carbon intensity at each corresponding time point may be recorded and transmitted to the charging vehicle via a charging station.

Returning to FIG. 2, subsequently, the charging station can transmit the corresponding time series of carbon intensities to a memory or IT backend 204 of the vehicle for storage.

When the vehicle is in motion, it can retrieve time series of carbon intensities from the memory of the vehicle or the IT backend connected to the vehicle according to a first-in-first-out principle. This allows the carbon equivalents while charging to be linked with the current power while driving, enabling a subsequent calculation and display of CO₂ equivalents per kilometer.

Returning to FIG. 1, furthermore, the data obtainment module 102 may determine the current power consumption per kilometer (kWh/km) or per hundred kilometers (kWh/100km) of the vehicle. The power consumption per kilometer/per hundred kilometers can be an important parameter for measuring range capability of an electric vehicle.

The CO₂ equivalents determination module 104 may then determine a current CO₂ equivalents per kilometer, gCO₂eq/km, of the vehicle based on the carbon intensity, gCO₂eq/kWh, and the power consumption per kilometer, kWh/km.

In one embodiment, the current CO₂ equivalents per kilometer, gCO₂eq/km, of the vehicle may be calculated by multiplying the carbon intensity, gCO₂eq/kWh, with the power consumption per kilometer, kWh/km.

The CO₂ equivalents display module 106 may display the current CO₂ equivalents per kilometer, gCO₂eq/km, (or CO₂ equivalents per hundred kilometers, gCO₂eq/100km) to a driver.

In one embodiment, the CO₂ equivalents display module may be configured as a dashboard, a head-up display (HUD) or any other display in the vehicle.

Furthermore, appropriate carbon emission reduction measures, for example, including activating an economic mode, changing to a more environmentally friendly driving mode (for example, maintaining a moderate to low and constant speed, using the vehicle's kinetic energy recovery function, reducing driving on poor road surfaces, using an internal air circulation to save power, controlling load, etc.) or any other suitable carbon emission reduction measures, may be recommended to the driver when the calculated current CO₂ equivalents per kilometer, gCO₂eq/km, of the vehicle is above a threshold.

Furthermore, time periods with low carbon intensities (for example, a proportion of sustainably generated energy in the energy mix is higher) and the corresponding charging stations may be recommended for users to choose at the next charging.

Those skilled in the art may understand that, the CO2 equivalents display system of the present invention can be implemented either in hardware or in software, and the modules can be merged or combined in any suitable manner.

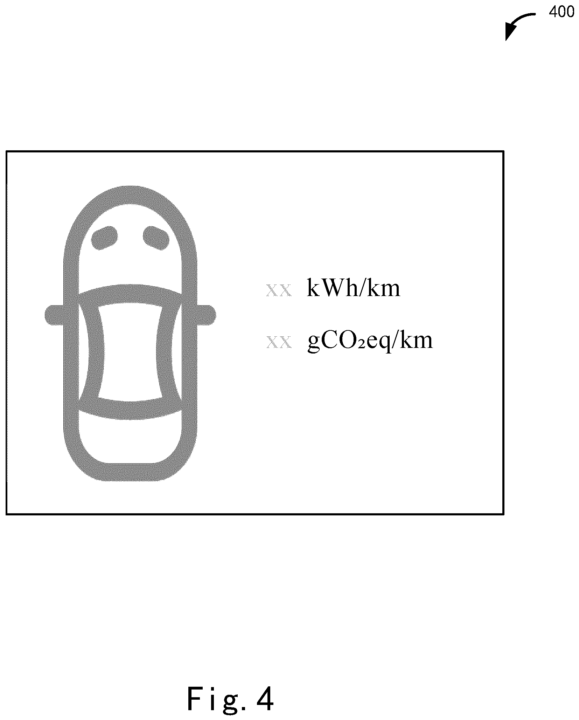

FIG. 4 shows an exemplary scenario of displaying CO2 equivalents at the vehicle end according to an embodiment of the present invention.

As shown in FIG. 4, the current power consumption per kilometer (kWh/km) and the current CO₂ equivalents per kilometer (gCO₂eq/km) are displayed on a central control screen of the vehicle. Therefore, drivers may be encouraged to adopt a more eco-friendly driving mode or to choose time periods or charging stations when carbon equivalents are lower when charging.

Of course, it can be understood that the above scenario is merely an example, and the current gCO₂eq/km can also be displayed on any other suitable in-vehicle display in any other manner. Likewise, the per 100 km power consumption (kWh/100km) can also be obtained and displayed as gCO₂eq/100km.

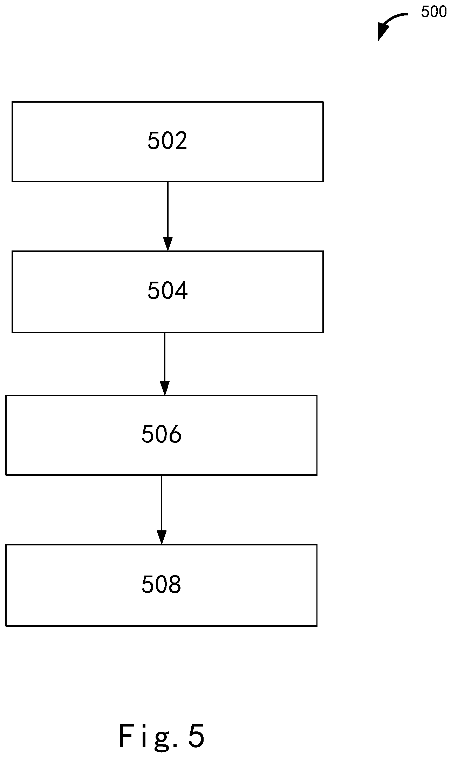

FIG. 5 shows a schematic flowchart of a CO2 equivalents display method for a vehicle according to an embodiment of the present invention.

The method 500 begins at step 502, the data obtainment module 102 may obtain a carbon intensity, gCO₂eq/kWh, per 1 kWh consumed, which is corresponding to that of a respective 1 kWh charge while charging when the vehicle is in motion, the carbon intensity being indicative of CO₂ equivalents per kWh.

In one embodiment, the carbon intensity may be obtained in a first-in-first-out manner from a time series of carbon intensities corresponding to the charge per kWh while charging.

In a further embodiment, the above time series of carbon intensities is stored in a memory of the vehicle or IT backend, and the corresponding carbon intensities can be retrieved from the memory of the vehicle or the IT backend based on the first-in-first-out principle when the vehicle is in motion.

In one embodiment, a carbon intensity corresponding to the charge per kWh while charging may depend on a composition of energy mix while charging and may be obtained from an application programming interface (API) of the corresponding electricity supplier while charging.

At step 504, the data obtainment module 102 may determine or obtain the current power consumption per kilometer (kWh/km) (of course, it may also obtain the power consumption per hundred kilometers (kWh/100km)) of the vehicle.

At step 506, the CO₂ equivalents determination module 104 may determine the current CO₂ equivalents per kilometer, gCO₂eq/km, of the vehicle based on the carbon intensity, gCO₂eq/kWh, and the power consumption per kilometer, kWh/km.

In one embodiment, the current CO₂ equivalents per kilometer, gCO₂eq/km may be calculated by multiplying the carbon intensity, gCO₂eq/kWh, with the power consumption per kilometer, kWh/km.

At step 508, the CO₂ equivalents display module 106 may display the calculated CO₂ equivalents per kilometer, gCO₂eq/km, to a driver.

In one embodiment, the CO₂ equivalents display module 106 may display the current CO₂ equivalents per kilometer of the vehicle, gCO₂eq/km, on a dashboard, a head-up display or any other display in the vehicle to the driver.

Further preferably, appropriate carbon emission reduction measures may be recommended to the driver when the current CO₂ equivalents per kilometer, gCO₂eq/km, of the vehicle is above a threshold, wherein the carbon emission reduction measures may include, for example, activating an economic mode, changing to a more environmentally friendly driving mode or any other suitable carbon emission reduction measures.

Further preferably, time periods with low carbon intensities (i.e., better energy mix) and the corresponding charging stations may be recommended for users to choose at the next charging.

Therefore, by considering the energy mix while charging (CO₂ equivalents per kilowatt-hour, "gCO₂eq/ kWh") and the power consumption during driving (kWh/km), the current CO₂ equivalents per kilometer or per hundred kilometers (greenhouse gas emissions) may be fed back to the driver in a visual manner, thereby may, for example, motivate the driver to adopt a more environmentally friendly driving mode, further facilitating carbon emission reduction at the vehicle end.

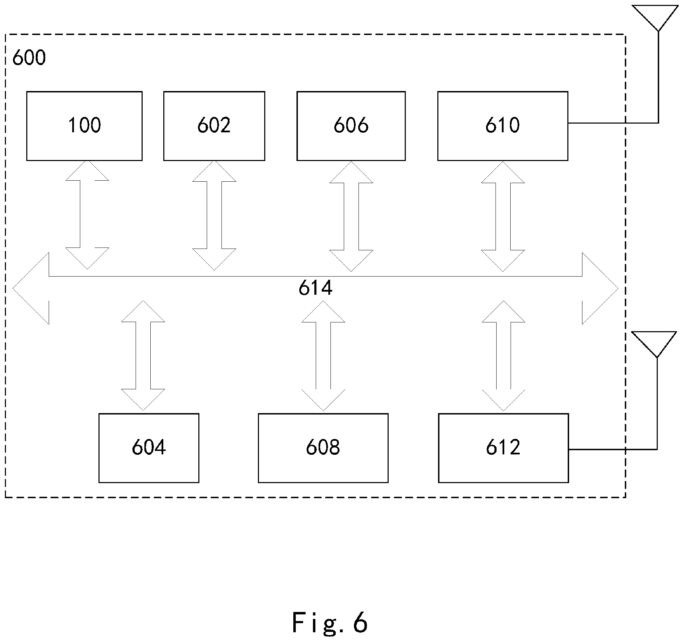

FIG. 6 shows an exemplary vehicle 600 supporting CO2 equivalents display according to an embodiment of the present invention. The vehicle 600 may comprise various software and hardware components connected via a bus 614.

The vehicle 600 may comprise the above CO₂ equivalents display system 100, which may be configured to: when the vehicle is in motion, obtain a carbon intensity, gCO₂eq/kWh, per 1 kWh consumed, which is corresponding to that of a respective 1 kWh charge while charging, the carbon intensity being indicative of CO₂ equivalents per kWh; determine a current power consumption per kilometer, kWh/km, of the vehicle; determine a current CO₂ equivalents per kilometer, gCO₂eq/km, of the vehicle based on the carbon intensity, gCO₂eq/kWh, and the power consumption per kilometer, kWh/km; and display the current CO₂ equivalents per kilometer, gCO₂eq/km, to a driver.

The vehicle 600 may further include a power system 602, which may comprise a power battery, a battery management system, an onboard charger and auxiliary power sources, etc. The power battery is the energy storage device and power source of an electric vehicle. Currently, pure electric vehicles primarily use lithium-ion batteries, including lithium iron phosphate batteries and ternary lithium-ion batteries, etc. The battery management system can monitor real-time usage of the power battery, detect power battery state parameters such as terminal voltage, internal resistance, temperature, battery electrolyte concentration, remaining battery capacity, discharge time, discharge current, and depth of discharge. It also regulates the temperature according to the requirements of the power battery on the ambient temperature, prevents overcharging and over-discharging of the power battery through current limiting control, and provides related parameter display and alerts. The system transmits signals to auxiliary systems and displays relevant information on an instrument cluster.

Furthermore, the vehicle 600 may also include a communication system 604, which can be used to communicate with a charging station when charging to obtain relevant charging information, such as the current charging progress and the corresponding carbon intensity value per kWh.

Furthermore, the vehicle 600 may also include a display system 606, which may be used to display the calculated CO₂ equivalents per kilometer, gCO₂eq/km, to a driver. In one embodiment, the display system 606 may be a dashboard, a head-up display (HUD) or any other display of the vehicle.

In addition, the vehicle 600 may further comprise a sensor system 608, a wireless transceiver 610, a Global Navigation Satellite System (GNSS) receiver 612, etc.

The sensor system 608 may comprise any suitable number of accelerometers, gyroscopes and/or magnetometers. In some embodiments, the sensor system 608 may be part of the inertial measurement unit (IMU) of the vehicle 600.The sensor system 608 may be used to provide and/or verify motion and directional information, monitor wheel and drivetrain system performance, and/or measure the oscillation amplitude and frequency of the components of the vehicle 400 and/or the vehicle 600.As an example, the accelerometer can measure the vibrations of the vehicle 600, such as movements or mechanical oscillations related to the balanced positioning of components around the vehicle 600.In one embodiment, the gyroscope and magnetometer of the sensor system 608 can be used to measure the vehicle's rotational state and orientation relative to magnetic north, respectively. They can also be utilized to measure and calibrate the estimation of the turning radius at the current speed and/or model and/or for measurement of maneuverability at the current speed, particularly when used in conjunction with measurements from other external and internal sensors, such as other sensors like speed sensors, wheel tick sensors, and/or odometer measurements. Additionally, the sensor system 608 may further comprise radar, LIDAR, vision sensors, etc. For example, LIDAR can provide a more reliable means of detecting the distance (and orientation) of objects, especially those with unknown sizes and shapes.

The wireless transceiver 610 may be configured to transmit and receive data messages and elements via short-range wireless communication protocols (For example, Bluetooth^{®}, Bluetooth Low Energy^{®}, etc.), and/or via a local area network (LAN) and/or a wide area network (WAN), and/or via a cellular network, and/or via any suitable wireless network. Of course, it should be understood that these are merely examples of networks that may be utilized by the vehicle 600 over a wireless link, and the claimed subject matter should not be limited in this regard. In one embodiment, the wireless transceiver 610 may comprise various combinations of WAN, WLAN, and/or PAN transceivers. In one embodiment, the wireless transceiver 610 may also comprise a Bluetooth transceiver, a ZigBee transceiver, or other PAN transceivers.

The GNSS receiver 612 may be configured to receive and digitally process signals from navigation satellites (and/or other vehicles) in order to provide the receiver's position, speed and time. The GNSS receiver 612 may comprise hardware and/or software components. In one embodiment, the GNSS signals received by the GNSS receiver 612 from GNSS satellites are used by the vehicle 600 for location determination and/or for GNSS signal parameters and demodulated data determination.

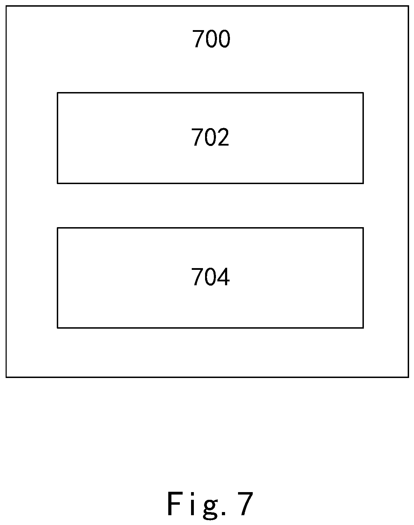

FIG. 7 shows an exemplary computing system architectural diagram of an exemplary computing system 700 that can implement various techniques described herein according to one embodiment of the present invention.

As shown in FIG. 7, the system 700 may include a memory 702 and at least one processor 704.The memory 702 may include RAM, ROM, or a combination thereof. The memory 702 may store computer executable instructions that, when executed by at least one processor 704, cause the at least one processor 704 to execute various functions described herein, comprising: when a vehicle is in motion, obtaining a carbon intensity, gCO₂eq/kWh, per 1 kWh consumed, which is corresponding to that of a respective 1 kWh charge while charging, the carbon intensity being indicative of CO₂ equivalents per kWh; determining a current power consumption per kilometer, kWh/km, of the vehicle; determining a current CO₂ equivalents per kilometer, gCO₂eq/km, of the vehicle based on the carbon intensity, gCO₂eq/kWh, and the power consumption per kilometer, kWh/km; and displaying the current CO₂ equivalents per kilometer, gCO₂eq/km, to a driver.

In one embodiment, the above carbon intensity may be obtained in a first-in-first-out manner from a time series of carbon intensities corresponding to the charge per kWh while charging.

In a further embodiment, the above time series of carbon intensities is stored in a memory of the vehicle or IT backend.

In one embodiment, a carbon intensity corresponding to the charge per kWh while charging may depends on a composition of energy mix while charging and may be obtained from an API of the corresponding electricity supplier while charging.

In one embodiment, the above determination may be calculated by multiplying the obtained gCO₂eq/kWh with the kWh/km.

In addition, these instructions, when executed by at least one processor 704, may further cause the at least one processor 704 to execute the following functions: recommending appropriate carbon emission reduction measures to the driver when the current CO₂ equivalents per kilometer, gCO₂eq/km, of the vehicle is above a threshold, the carbon emission reduction measures including activating an economic mode, changing to a more environmentally friendly driving mode or any other suitable carbon emission reduction measures.

Furthermore, these instructions, when executed by at least one processor 704, may further cause the at least one processor 704 to perform the following function: recommending time periods with low carbon intensities and the corresponding charging stations for users to choose at the next charging.

In some cases, the memory 702 may, in particular, comprise a BIOS that controls basic hardware or software operations, such as interactions with peripheral components or devices. Processor 704 may include intelligent hardware devices (for example, general-purpose processors, DSPs, CPUs, microcontrollers, ASICs, FPGAs, programmable logic devices, discrete gate or transistor logic components, discrete hardware components, or any combination thereof).

The functions described herein may be implemented in hardware, software executed by a processor, firmware, or any combination thereof. If implemented in software executed by a processor, the respective functions may be stored on or transferred by means of a computer-readable medium as one or more instructions or codes. Other examples and implementations fall within the scope of the present disclosure and the appended claims. For example, due to the nature of software, the functions described herein may be implemented in software executed by a processor, hardware, firmware, hardwiring, or any combination thereof. Features that implement the functions may also be physically located at various locations, including being distributed so that portions of the functions are implemented at different physical locations.

The content already described above includes examples of various aspects of the claimed subject matter. Of course, it is impossible to describe every conceivable combination of components or methods for the purpose of depicting the claimed subject matter, but those of ordinary skill in the art should recognize that many further combinations and arrangements of the claimed subject matter are possible. Thus, the subject matter disclosed is intended to cover all such changes, modifications and changes falling within the spirit and scope of the appended claims.

## Claims

1. A method for displaying CO₂ equivalents for a vehicle, the method comprising:
when the vehicle is in motion, obtaining a carbon intensity, gCO₂eq/kWh, per 1 kWh consumed, which is corresponding to that of a respective 1 kWh charge while charging, the carbon intensity being indicative of CO₂ equivalents per kWh;
determining a current power consumption per kilometer, kWh/km, of the vehicle;
determining a current CO₂ equivalents per kilometer, gCO₂eq/km, of the vehicle based on the carbon intensity, gCO₂eq/kWh, and the power consumption per kilometer, kWh/km; and
displaying the current CO₂ equivalents per kilometer, gCO₂eq/km, to a driver.

2. The method of Claim 1, wherein the carbon intensity is obtained in a first-in-first-out manner from a time series of carbon intensities corresponding to the charge per kWh while charging.

3. The method of Claim 2, wherein the time series of carbon intensities is stored in a memory of the vehicle or IT backend.

4. The method of Claim 1, wherein the current CO₂ equivalents per kilometer, gCO₂eq/km is calculated by multiplying the carbon intensity, gCO₂eq/kWh, with the power consumption per kilometer, kWh/km.

5. The method of Claim 1, wherein a carbon intensity corresponding to the charge per kWh while charging depends on a composition of energy mix while charging and is obtained from an API of the corresponding electricity supplier while charging.

6. The method of Claim 1, wherein displaying the current CO₂ equivalents per kilometer, gCO₂eq/km, to a driver further comprising:
displaying the current CO₂ equivalents per kilometer, gCO₂eq/km, on a dashboard, a head-up display or any other display in the vehicle to the driver.

7. The method of Claim 1, further comprising:
recommending appropriate carbon emission reduction measures to the driver when the current CO₂ equivalents per kilometer, gCO₂eq/km, of the vehicle is above a threshold, the carbon emission reduction measures including activating an economic mode, changing to a more environmentally friendly driving mode or any other suitable carbon emission reduction measures.

8. The method of Claim 1, further comprising:
recommending time periods with low carbon intensities and the corresponding charging stations for users to choose at the next charging.

9. A system for displaying CO₂ equivalents for a vehicle, the system comprising:
a data obtainment module configured to:
obtain a carbon intensity, gCO₂eq/kWh, per 1 kWh consumed, which is corresponding to that of a respective 1 kWh charge while charging when the vehicle is in motion, the carbon intensity being indicative of CO₂ equivalents per kWh;
determine a current power consumption per kilometer, kWh/km, of the vehicle;
a CO₂ equivalents determination module configured to determine a current CO₂ equivalents per kilometer, gCO₂eq/km, of the vehicle based on the carbon intensity, gCO₂eq/kWh, and the power consumption per kilometer, kWh/km; and
a CO₂ equivalents display module configured to display the current CO₂ equivalents per kilometer, gCO₂eq/km, to a driver.

10. The system of claim 9, wherein the carbon intensity is obtained in a first-in-first-out manner from a time series of carbon intensities corresponding to the charge per kWh while charging.

11. The system of Claim 10, wherein the time series of carbon intensities is stored in a memory of the vehicle or IT backend.

12. The system of Claim 9, wherein a carbon intensity corresponding to the charge per kWh while charging depends on a composition of energy mix while charging and is obtained from an API of the corresponding electricity supplier while charging.

13. The system of Claim 9, wherein the CO₂ equivalents display module is configured as a dashboard, a head-up display or any other display in the vehicle.

14. A vehicle comprising the system for displaying CO₂ equivalents of any of claims 9-13.

15. A computer-readable storage medium storing instructions that, when executed, cause a vehicle to perform the method of any of claims 1-8.
